# EUROPEAN PATENT APPLICATION

(11) **EP 2 760 189 A2**
(43) Date of publication of application: **30.07.2014**
(21) Application number: 13168670.1
(22) Date of filing: 22.05.2013
(51) Int. Cl.: H04M 3/42

(54) **System having telephone call recording functionality**

(30) Priority: 25.01.2013 TW 102201751 U
(71) Applicant: Compal Broadband Networks Inc., 114 Taipei City (TW)
(72) Inventor: Kuo, Shih-Hsien, 852 Kaohsiung City (TW)
(74) Representative: Becker Kurig Straus

(57) **Abstract**

A system having a telephone recording functionality which includes a integrated router (106) for performing conversion of a network phone signal of an Internet network (102), a storage device (110) coupled to the integrated router, a telephone (108) and a switch device (104) for connecting a public switched telephone network (100) to the telephone and the integrated router according to a switch phone signal of the public switched telephone network and connecting the integrated router to the telephone according to the network phone signal, wherein the integrated router converts the switch phone signal and the network phone signal in a digital form to store in the storage device according to the switch phone signal or the network phone signal and generates a recording information.

## Description

### Field of the Invention

The invention relates to a system having telephone recording functionality, and especially relates to a system having telephone recording functionality and network accessing functionality.

### Background of the Invention

In addition to a switch phone system established under a public switched telephone network (PSTN), current telephone systems may also be achieved via Internet, i.e. network phone system or Voice over Internet Protocol (VoIP). Both the switch phone system and the network phone system may utilize a recording device to record communicating conversations as voice data, or utilize an answering device to give a prompted voice and record the incoming sounds as the voice data when no user receives the call.

A conventional recording device or answering device may store the voice data in a tape or a rewritable flash memory, or upload the voice data through a network to a server of the network and utilize a storage device, such as a hard disk, configured by the server to store the voice data. However, when the tape or the rewritable flash memory in the device are utilized for storing the voice data, the configured storage capacities of the tape or the rewritable flash memory may often be limited due to a cost consideration, and usually only the voice data with tens of minutes may be stored. Moreover, if the voice data is uploaded and stored through the network, when the network is unable to be accessed or a failure of the server occurs, the communicating conversations may be lost, and the failure is also not easily solved. Thus, it is necessary to provide a recording system capable of safely and conveniently storing the voice data with a large storage capacity.

### Summary of the Invention

The present invention aims at providing a system having a telephone recording functionality and a network accessing functionality to first store recording voice data in a storage device and then access the recording voice data by a network.

This is achieved by a system having a telephone recording functionality according to claim 1. The dependent claims pertain to corresponding further developments and improvements.

As will be seen more clearly from the detailed description following herebelow, the claimed system having a telephone recording functionality comprises an integrated router, coupled to an Internet network and comprising a network phone terminal, capable of accessing the Internet network for performing a conversion of a network signal of the Internet network and a network phone signal of the network phone terminal between the Internet network and the network phone terminal; a storage device, coupled to the integrated router; a telephone; and a switch device, coupled to a public switched telephone network, the telephone, and the network phone terminal of the integrated router, for connecting the public switched telephone network to the telephone and the integrated router according to a switch phone signal of the public switched telephone network, and connecting the integrated router to the telephone according to the network phone signal of the network phone terminal; wherein the integrated router converts the switch phone signal and the network phone signal in a digital form to store in the storage device according to the switch phone signal or the network phone signal and generates a recording information.

### Brief Description of the Drawings

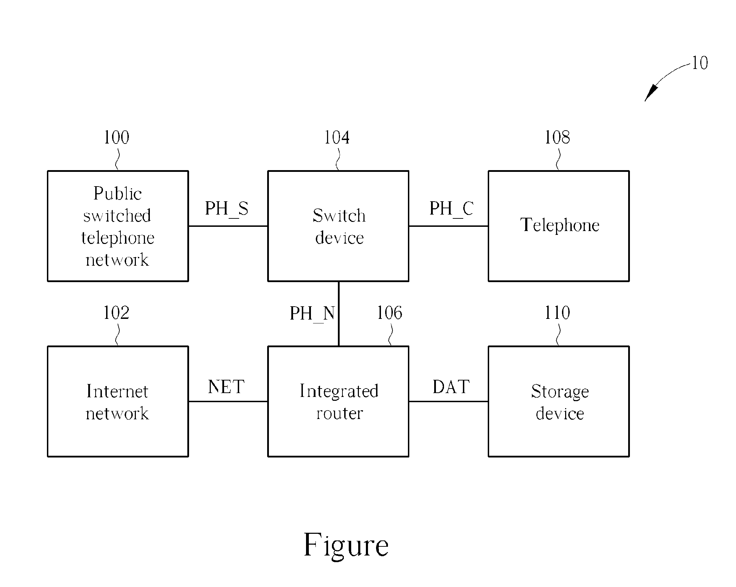

FIG. 1 is a schematic diagram of a system according to an embodiment of the present invention.

### Detailed Description

FIG. 1 is a schematic diagram of a system 10 illustrating an embodiment of the present invention. The system 10 includes a public switched telephone network (PSTN) 100, an Internet network 102, a switch device 104, an integrated router 106, a telephone 108 and a storage device 110. The integrated router 106 is coupled to the Internet network 102, it accesses the Internet network 102 through a network line NET, and converts signals of the Internet network 102 to network signals for providing network accessing of other user ends. The integrated router 106 has different accessing circuits corresponding to different network service systems. For example, a commonly-seen access circuit of a cable system (i.e. a circuit of cable modem) converts signals of the cable system to the network signals for linking with computers. The storage device 110 is coupled to the integrated router 106 and may be a universal serial bus (USB) storage disk or a secure digital (SD) memory card, etc. Thereby, the storage device 110 may be removed and easily taken by the user, and may also be selected as a storage disk complying with a capacity requirement according to the size of data to be stored.

The integrated router 106 may analyze the network signals with network phone packets, convert the network signals to network phone signals for communicating with the telephone 108 and transfer the network phone signals to the switch device 104 through a network phone line PH_N. In addition, the integrated router 106 may also receive network phone signals outputted from the switch device 104 and converts the network phone signals to network signals. The switch device 104 is coupled to the PSTN 100, the integrated router 106, and the telephone 108. The switch device 104 performs a bidirectional transmission of switch phone signals with the PSTN 100 through a switch phone line PH_S, and is coupled to the telephone 108 by a call phone line PH_C. The switch phone line PH_S, the network phone line PH_N, and the call phone line PH_C may be as a commonly-seen phone line with Registered Jack 11 (RJ-11) connector, and have bidirectional transmission line for transferring the signals (i.e. the switch phone signals and the network phone signals) between two devices.

In such a condition, when the switch device 104 receives the switch phone signals transmitted from the PSTN 100, the switch device 104 may connect the switch phone line PH_S to the call phone line PH_C, such that the telephone 108 may communicate with the PSTN 100, i.e. the telephone 108 may communicate with the other side by utilizing a traditional switch phone system. Meanwhile, the switch device 104 may also connect the switch phone line PH_S to the network phone line PH_N, and the switch phone signals transmitted from the PSTN 100 may also be transferred to the integrated router 106. On the other hand, when the switch device 104 receives the network phone signals outputted from the integrated router 106, the switch device 104 may connect the network phone line PH_N to the call phone line PH_C, so that the telephone 108 may communicate with the Internet network 102 (i.e. communicating with another user by utilizing a network phone system).

Since the network phone line PH_N may be also simultaneously connected to the switch phone line PH_S, when the telephone 108 communicates with the PSTN 100, the integrated router 106 may convert the switch phone signals transferred through the network phone line PH_N to digital voice data and record the digital voice data in the storage device 110. Thus, communicating conversations between the telephone 108 and the PSTN 100 may be recorded in the storage device 110. Similarly, when the telephone 108 communicates with the Internet network 102, the integrated router 106 may convert the network phone signals to digital voice data and record the digital voice data in the storage device 110, and thus communicating conversations between the telephone 108 and the Internet network 102 may be recorded in the storage device 110.

When the PSTN 100 outputs the switch phone signals to the switch device 104 for communicating with the telephone 108 and the telephone 108 is not answered by any user, since the switch phone line PH_S is also connected to the network phone line PH_N, the integrated router 106 may determine that no user answers the communication for a predefined period. The integrated router first reads replying voice data previously stored in the storage device 110 and converts the voice data for communicating with the PSTN 100. Then, the integrated router 106 converts the follow-up communicating switch phone signals to the digital voice data and records the digital voice data in the storage device 110. As a result, when the telephone 108 is not answered by any user, the integrated router 106 may communicate with the PSTN 100 after the predefined period and inform the other side to leave messages to then record the follow-up communicating conversations.

Similarly, when the network phone signals transmitted from the Internet network 102 are communicated with the telephone 108 and the telephone 108 is not answered by any user, the integrated router 106 may determine that no user answers the communication for a predefined period. The integrated router 106 reads the replying voice data previously stored in the storage device 110, and converts the voice data for communicating with the Internet network 102. Then, the integrated router 106 converts the follow-up communicating network phone signals to the digital voice data and records the digital voice data in the storage device 110. As a result, when the telephone 108 is not answered by any user, the integrated router 106 may communicate with the Internet network 102 after the predefined period and inform the other side to leave messages to then record the follow-up communicating conversations.

In short, the system 10 converts the network signals to the phone signals by the integrated router 106 to achieve a network phone functionality. Moreover, the system 10 may also record the communicating conversations of the switch phone system or the network phone system, or perform an answering function when no user answers. Meanwhile, the system 10 may store the recording voice data in the external storage device (such as the USB storage disk). As a result, the system 10 is not required to store the voice data through the network, and the storage capacity of the storage device 110 may be selected according to the requirements, such that the system 10 may not only record the communicating conversations with tens of minutes due to the limitation of the storage capacity. In such a condition, the system 10 may safely record the communicating conversations and the storage device 110 may be removed and replaced by other storage device with suitable storage capacity, or be mounted to other playback devices.

Furthermore, every time the integrated router 106 performs a recording, the integrated router 106 may further store recording information, such as the recording or answering information including timing information or a phone number, in the storage device 110. Meanwhile, the integrated router 106 may display the recording information on another configured display element, such as a panel, or trigger a light emitting diode (LED) blinking to indicate that the voice data has been stored in the storage device 110 to be noticed to inform the user that a call has not been answered. As a result, the user may be informed and read the recording information related to the missing communication, so as to listen to the recording voice data.

Since the integrated router 106 has a network accessing functionality, the system 10 may also transfer the stored recording information to the Internet network 102 by the integrated router 106, such as sending the recording information to a predefined email address, or sending a message to a mobile device, such as a smart phone, of a predefined user to notify the user that he missed a phone call. The user may also utilize a device having network communication functionality, such as a computer or a smart phone, and coordinate with the network accessing functionality of the integrated router 106 to access or manage (e.g. to delete or to copy) the recording information or the voice data stored in the storage device 110.

As can be seen, the system 10 may record the communicating conversations in the external storage device 110 so as to be easily carried, and may further combine the network accessing functionality to broadcast the recording information to the Internet network 102, or to access and manage the recording information and the voice data through the Internet network 102. As a result, the user may easily obtain the recording information and listen to the recording voice data.

Noticeably, the system 10 is only an embodiment of the present invention, and those skilled in the art can make modifications or alterations accordingly. For example, in the embodiment mentioned here above, the switch device 104 determines the connecting method of the switch phone line PH_S, the call phone line PH_C, and the network phone line PH_N according to the switch phone signals and the network phone signals, so as to communicate and record the communicating conversations in the switch phone system and the network phone system. In another embodiment, the switch device 104 may be a part of the integrated router 106, or the switch device 104 and the integrated router 106 are integrated as a device to simultaneously control the connection and perform the recording and answering, altering its activities according to the actual requirements or the cost consideration.

A further example is that when the telephone 108 is not answered by any user in the embodiment here above, the integrated router 106 converts the replying voice data previously stored in the storage device 100 to notify the other side to leave a message. However, in other embodiments, multiple replying voice data may be previously stored and are configured to corresponding phone numbers. When a call of a corresponding phone number is not in communication for a predefined period, the integrated router 106 converts the corresponding replying data to notify the other side to leave a message, so as to achieve a personalized voice functionality of automatic answering, which may make alterations and is not limited herein.

In summary, the prior art utilizes the tape or the rewritable flash memory in the device to store the voice data, and the configured storage capacity of the tape or the rewritable flash memory may often be limited due to a cost consideration. Moreover, if the voice data is stored through the network, when the network is unable to be communicated with or a failure of a server occurs, the communicating conversations may be lost and the failure is also not easily solved. In comparison, the system of the present invention may safely record the communicating conversations and the storage device 110 may be removed and replaced by other storage device with suitable storage capacity, or be mounted to other playback devices. The system of the present invention may further combine the network accessing functionality to transmit the recording information to the Internet network, or to access and manage the recording information and the voice data through the Internet network. As a result, the user may more easily obtain the recording information and the recording voice data, which is convenient.

## Claims

1. A system (10) having a telephone recording functionality, **characterized by** the system (10) comprising:
an integrated router (106), coupled to an Internet network (102) and comprising a network phone terminal, capable of accessing the Internet network (102) for performing a conversion of a network signal of the Internet network (102) and a network phone signal of the network phone terminal between the Internet network (102) and the network phone terminal;
a storage device (110), coupled to the integrated router (106);
a telephone (108); and
a switch device (104), coupled to a public switched telephone network (100), the telephone (108), and the network phone terminal of the integrated router (106), for connecting the public switched telephone network (100) to the telephone (108) and the integrated router (106) according to a switch phone signal of the public switched telephone network (100), and connecting the integrated router (106) to the telephone (108) according to the network phone signal of the network phone terminal;
wherein the integrated router (106) converts the switch phone signal and the network phone signal in a digital form to store in the storage device (110) according to the switch phone signal or the network phone signal, and generates a recording information.

2. The system (10) of claim 1, **characterized in that** the integrated router (106) converts the switch phone signal in a digital form to store in the storage device (110) according to the switch phone signal to indicate that the telephone (108) has communicated with the public switched telephone network (100).

3. The system (10) of claim 1, **characterized in that** the integrated router (106) converts the network phone signal in a digital form to store in the storage device (110) according to the network phone signal to indicate that the telephone (108) has communicated with the Internet network (102).

4. The system (10) of claim 1, **characterized in that** the integrated router (106) communicates with the public switched telephone network (100) according to the switch phone signal to indicate that a call between the telephone (108) and the public switched telephone network (100) is not in communication for a predefined period, and converts the switch phone signal in a digital form to store in the storage device (110).

5. The system (10) of claim 4, **characterized in that** after the predefined period, the integrated router (106) further converts a voice data to output to the communicated public switched telephone network (100).

6. The system (10) of claim 1, **characterized in that** the integrated router (106) communicates with the Internet network (102) according to the network phone signal to indicate that a call between the telephone (108) and the Internet network (102) is not in communication for a predefined period, and converts the network phone signal in a digital form to store in the storage device (110).

7. The system (10) of claim 6, **characterized in that** after the predefined period, the integrated router (106) further converts a voice data to output to the communicated Internet network (102).

8. The system (10) of claim 1, **characterized in that** the integrated router (106) further switches on a display element of the integrated router (106) according to the recording information to show that a storing record is existing.

9. The system (10) of claim 8, **characterized in that** the display element is a light emitting diode (LED).

10. The system (10) of claim 1, **characterized in that** the integrated router (106) further transfers the recording information to the Internet network (102).

11. The system (10) of claim 10, **characterized in that** the integrated router (106) transfers the recording information by sending an email to the Internet network (102).

12. The system (10) of claim 1, **characterized in that** a device accesses the recording information through the integrated router (106).

13. The system (10) of claim 1, **characterized in that** the storage device (110) is a universal serial bus (USB) storage disk.

14. The system (10) of claim 1, **characterized in that** the storage device (110) is a secure digital (SD) memory card.
